# EUROPEAN PATENT APPLICATION

(11) **EP 4 625 622 A1**
(43) Date of publication of application: **01.10.2025**
(21) Application number: 24738679.0
(22) Date of filing: 02.01.2024
(51) Int. Cl.: H01M 10/654, H01M 10/615, H01M 10/6555

(54) **LITHIUM SECONDARY BATTERY COMPRISING HEAT-DISSIPATING CURRENT COLLECTOR**

(30) Priority: 04.01.2023 KR 20230001463; 27.12.2023 KR 20230193646
(71) Applicant: LG Energy Solution, Ltd., Seoul 07335 (KR)
(72) Inventor: PAENG, Ki Hoon, Daejeon 34122 (KR); NA, Seon Hyeong, Daejeon 34122 (KR)
(74) Representative: Hoffmann Eitle
(86) International application number: PCT/KR2024/000058
(87) International publication number: WO 2024/147608

(57) **Abstract**

A lithium secondary battery includes an electrode assembly and a battery case configured to accommodate the electrode assembly. The electrode assembly includes a plurality of positive electrodes, a plurality of negative electrodes, and a plurality of separators, which are sequentially stacked, and at least one of the plurality of positive electrodes and the plurality of negative electrodes includes a heat dissipation current collector and an electrode active material layer formed on at least one surface of the heat dissipation current collector. The heat dissipation current collector includes a heat dissipation layer, a polymer layer disposed on the heat dissipation layer, and a metal layer disposed on the polymer layer, and the heat dissipation layer of the heat dissipation current collector includes a passage extending to the outside of the battery case and configured to dissipate heat inside the battery.

## Description

### TECHNICAL FIELD

This application is based on and claims priority from Korean Patent Application No. 10-2023-0001463, filed on January 4, 2023 and Korean Patent Application No. 10-2023-0193646, filed on December 27, 2023 with the Korean Intellectual Property Office, the disclosure of which is incorporated herein in its entirety by reference.

The present disclosure relates to a lithium secondary battery including a heat dissipation current collector, and more specifically, to a lithium secondary battery including a heat dissipation current collector to improve safety by dissipating heat generated inside the lithium secondary battery to the outside.

### BACKGROUND ART

With the development of technology and increasing demand for electric vehicles and energy storage systems (ESS), the demand for batteries as an energy source is rapidly increasing, and accordingly, research on batteries capable of meeting various needs is being conducted. In particular, research is being actively conducted on lithium secondary batteries that have high energy density as a power source for the above-mentioned devices and have excellent lifespan and cycle characteristics.

However, in lithium secondary batteries, the temperature of electrodes may rapidly increase due to thermal and physical factors. As a thermal factor, overcharging or overload due to, for example, misuse of a lithium secondary battery and failure of a charger, and as a physical factor, when a separator is damaged due to, for example, an external impact, negative and positive electrode materials are brought into contact with each other, and an internal short circuit occurs, the temperature of electrodes may rise rapidly.

Therefore, measures are needed to address the rapid rise in temperature of lithium secondary batteries.

### DISCLOSURE OF THE INVENTION

### TECHNICAL PROBLEM

The present disclosure relates to a lithium secondary battery including a heat dissipation current collector to improve safety by dissipating heat generated inside the lithium secondary battery to the outside.

### TECHNICAL SOLUTION

In an aspect, the present disclosure provides a lithium secondary including an electrode assembly and a battery case configured to accommodate the electrode assembly. The electrode assembly includes a positive electrode, a negative electrode, and a separator which are sequentially stacked, and at least one of the positive electrode and the negative electrode includes a heat dissipation current collector and an electrode active material layer formed on at least one surface of the heat dissipation current collector. The heat dissipation current collector includes a heat dissipation layer, a polymer layer disposed on the heat dissipation layer, and a metal layer disposed on the polymer layer, and the heat dissipation layer of the heat dissipation current collector includes a passage extending to the outside of the battery case and configured to dissipate heat inside the battery.

The heat dissipation layer may include at least one of silicone and acrylic resin.

The heat dissipation layer may have an insulating property.

The thermal conductivity (k1) of the heat dissipation layer may be about 10 W/K·m or less.

The metal layer may contain aluminum or copper.

The thermal conductivity (k2) of the metal layer may be about 200 W/K·m to 500 W/K·m.

The ratio (k2/k1) of the thermal conductivity (k2) of the metal layer to the thermal conductivity (k1) of the heat dissipation layer may be about 40 to 200.

The polymer layer may include at least one selected from the group consisting of polyethylene terephthalate (PET), polyimide (PI), polymethyl methacrylate (PMMA), cellulose triacetate (CTA), polypropylene (PP), polyethylene (PE), polycarbonate (PC), and polyethylene naphthalate (PEN).

The ratio (t3/t1) of the melting point (t3) of the polymer layer to the melting point (t1) of the heat dissipation layer may be about 0.1 to 2.0.

The ratio (w2/w1) of the thickness (w2) of the metal layer to the thickness (w1) of the heat dissipation layer may be about 0.67 or less.

The polymer layer may include a first polymer layer and a second polymer layer disposed to be spaced apart from each other, and the metal layer may include a first metal layer and a second metal layer disposed to be spaced apart from each other. The first polymer layer and the first metal layer may be sequentially stacked on one surface of the heat dissipation layer, and the second polymer layer and the second metal layer may be sequentially stacked on the other surface of the heat dissipation layer.

The electrode assembly may include a plurality of positive electrodes, a plurality of negative electrodes, and a plurality of separators, and an electrode including the heat dissipation current collector is disposed at an outermost position of the electrode assembly.

In another aspect, the present disclosure provides a lithium secondary battery electrode assembly including a positive electrode, a negative electrode, and a separator. At least one of the positive electrode and the negative electrode includes a heat dissipation current collector including a heat dissipation layer having a lower thermal conductivity than the thermal conductivity of a metal layer used as the current collector of the corresponding electrode, and the heat dissipation layer extends to the outside of the battery and is configured to dissipate heat inside the battery to the outside of the battery.

The heat dissipation current collector may include a polymer layer on at least one surface of the heat dissipation layer and a metal layer disposed on the polymer layer.

The polymer layer may have a melting point substantially similar to that of the heat dissipation layer.

In still another aspect, the present disclosure provides a method of manufacturing a lithium secondary battery electrode assembly including a positive electrode, a negative electrode, and a separator. The method includes: configuring at least one of the positive electrode and the negative electrode to include a heat dissipation current collector including a heat dissipation layer having a lower thermal conductivity than the thermal conductivity of a metal layer used as the current collector of the corresponding electrode; and configuring the heat dissipation layer to extend to the outside of the battery and to dissipate heat inside the battery to the outside of the battery.

The heat dissipation current collector may be configured to include a polymer layer on at least one surface of the heat dissipation layer and a metal layer disposed on the polymer layer.

The polymer layer may be configured to have a melting point substantially similar to that of the heat dissipation layer.

### ADVANTAGEOUS EFFECTS

According to the present disclosure, since the electrode assembly includes the heat dissipation layer having a thermal conductivity lower than the thermal conductivity of the metal layer, heat from the metal layer is transferred to the heat dissipation layer, and the heat dissipation layer dissipates the heat to the outside of the battery. Therefore, it is possible to prevent a risk such as ignition of the lithium secondary battery, to ensure safety, and to prevent deterioration of the lithium secondary battery.

According to the present disclosure, by including silicone or acrylic resin, the heat dissipation layer can be stable against a secondary internal short circuit when the electrode structure collapses due to an external impact.

According to the present disclosure, since the heat dissipation layer has a melting point substantially similar to that of the polymer layer, it is possible to suppress current inflow to another electrode, which is required for a rapid rise in the temperature of the lithium secondary battery.

### BRIEF DESCRIPTION OF THE DRAWINGS

FIG. 1 is a view illustrating a lithium secondary battery according to an embodiment of the present disclosure.
FIG. 2 is a cross-sectional view illustrating an electrode including a heat dissipation current collector according to an embodiment of the present disclosure.

Corresponding reference characters indicate corresponding components throughout the several views of the drawings. Skilled artisans will appreciate that elements in the FIGURES are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### MODE FOR CARRYING OUT THE INVENTION

Advantages and characteristics of the present disclosure and a method of achieving the advantages and characteristics will become clear by referring to embodiments described in detail below together with the accompanying drawings. However, the present disclosure is not limited to the embodiments to be described below but may be implemented in various different forms. These embodiments are provided merely to ensure that the present disclosure is completely disclosed and to fully inform a person ordinarily skilled in the art to which the present disclosure pertains of the scope of the present disclosure. The present disclosure is defined only by the claims. Like reference numerals indicate like components throughout the specification.

Unless otherwise defined, all terms (including technical and scientific terms) used herein may be used with meanings that can be commonly understood by a person ordinarily skilled in the art to which the present disclosure pertains. In addition, terms defined in commonly used dictionaries are not interpreted ideally or excessively unless clearly and specifically defined.

The terms used herein are for describing embodiments and are not intended to limit the present disclosure. As used herein, the singular also include the plural unless specifically stated in the phrase. As used herein, "comprises" and/or "comprising" does not exclude the presence or addition of one or more other components in addition to the mentioned components.

When it is described herein that a part includes a certain component, this means that, unless specifically stated otherwise, other components may be further included rather than being excluded.

The description "A and/or B" used herein means A, or B, or A and B.

Herein, "%" means weight percent unless explicitly stated otherwise.

Herein, "thermal conductivity" means the inherent property of a material that indicates the degree to which heat is transferred from one side to the other. The unit of the thermal conductivity is W/K·m, which means the amount of heat flowing per second through 1 m² of a 1-m thick plate when there is a temperature difference of 1°C between both ends.

As used herein, terms "about", "approximately", and "substantially" are used to mean a range of values or degrees, or approximations thereof, considering unique manufacturing and material tolerances, and are used to prevent an infringer from unfairly exploiting the described content where precise or absolute values are mentioned in order to aid understanding of the present disclosure.

When the temperature of electrodes in a lithium secondary battery rises rapidly, the battery may become very unstable due to the reaction between the electrolyte and lithium or the generation of hydrogen and oxygen inside the battery, the solvent in the electrolyte may decompose to generate gas, and the decomposed gas of the solvent may ignite, leading to the explosion of the battery.

A conventional lithium secondary battery includes only a single metal layer as an electrode current collector. For example, a single metal layer of aluminum was used as a positive electrode current collector, and a single metal layer of copper was used as a negative electrode current collector. However, since the single metal layer of aluminum or copper has a relatively high electrical conductivity and thermal conductivity and does not include a passage through which heat is dissipated to the outside of the battery, the time it takes to instantaneously reach a high temperature due to abnormal behavior of the battery is relatively short.

The present disclosure provides a lithium secondary battery with improved safety by dissipating heat to the outside even when the temperature of the lithium secondary battery rises rapidly.

Hereinafter, a lithium secondary battery according to the present disclosure will be described.

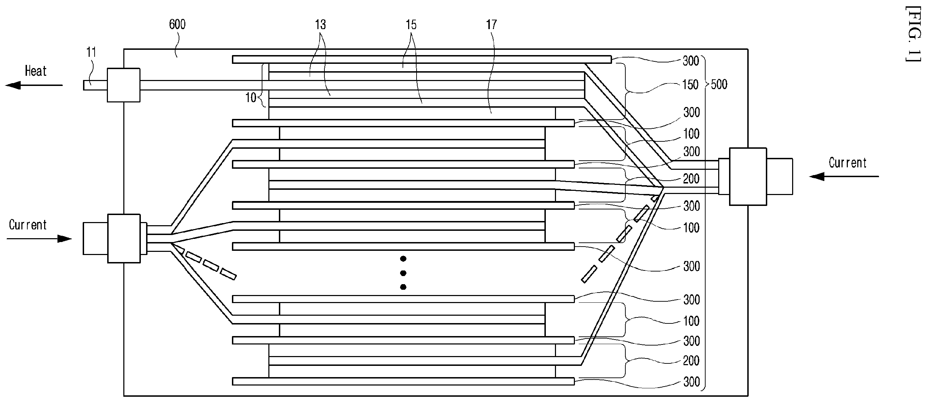

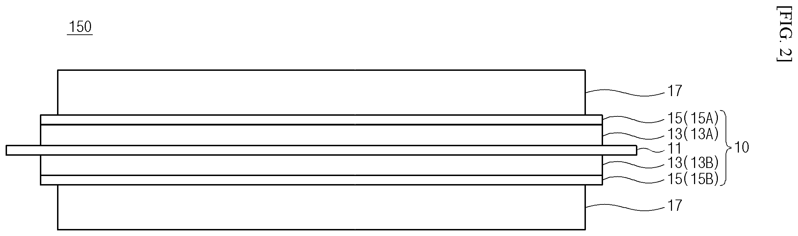

FIG. 1 is a view illustrating a lithium secondary battery according to an embodiment of the present disclosure. FIG. 2 is a cross-sectional view illustrating an electrode including a heat dissipation current collector according to an embodiment of the present disclosure.

Referring to FIGS. 1 and 2, the lithium secondary battery includes an electrode assembly 500 and a battery case 600 that accommodates the electrode assembly. The electrode assembly 500 includes a plurality of positive electrodes 100, a plurality of negative electrodes 200, and a plurality of separators 300, which are sequentially stacked. At least one of the plurality of positive electrodes 100 and the plurality of negative electrodes 200 includes a heat dissipation current collector 10 and an electrode active material layer formed on at least one surface of the heat dissipation current collector 10. The heat dissipation current collector 10 includes a heat dissipation layer 11, a polymer layer 13 disposed on the heat dissipation layer 11, and a metal layer 15 disposed on the polymer layer 13, and the heat dissipation layer 11 of the heat dissipation current collector 10 includes a passage extending outside the battery case 600 to dissipate heat inside the battery.

In the case of a conventional electrode current collector including only a single metal layer, for example, a single metal layer of aluminum is included as the positive electrode current collector, and a single metal layer of copper is included as the negative electrode current collector. However, in this case, since a passage for dissipating heat to the outside is not included when the metal layer has a very high electrical conductivity and thermal conductivity, and only the single metal layer is included, the time it takes to instantaneously reach a high temperature as compared to a normal temperature due to abnormal behavior of the battery is very short, and there is a high risk of explosion. In contrast, by including the heat dissipation layer 11 that has a lower thermal conductivity than the metal layer 15, the heat dissipation current collector 10 according to the present disclosure may have a lower rising temperature compared to the conventional electrode current collector including only a single metal layer. That is, the heat dissipation current collector 10 according to the present disclosure is able to dissipate the heat generated inside the battery to the outside of the battery via the heat dissipation layer 11, thereby preventing a risk such as ignition of the battery and ensuring safety.

### Electrode Assembly

The electrode assembly 500 may include a plurality of positive electrodes 100, a plurality of negative electrodes 200, and a plurality of separators 300, and at least one of the positive electrodes 100 and the negative electrodes 200 may be an electrode 150 including a heat dissipation current collector 10. The example of FIG. 1 illustrates a plurality of secondary battery electrode assemblies within a battery case 600 according to an embodiment, but the present disclosure is not limited thereto. For example, the battery case 600 may include only a basic unit constituting a lithium secondary battery, for example, two electrode assemblies of a positive electrode and a negative electrode, of which the positive electrode or the negative electrode may be the electrode 150 including the above-mentioned heat dissipation current collector 10.

### (Heat Dissipation Current Collector)

The heat dissipation current collector 10 includes a heat dissipation layer 11, a polymer layer 13 disposed on the heat dissipation layer 11, and a metal layer 15 disposed on the polymer layer 13. The heat dissipation layer 11 of the heat dissipation current collector 10 includes a passage that extends to the outside of the battery case 600 to dissipate the heat inside the battery. Meanwhile, the heat dissipation layer 11 of the heat dissipation current collector 10 may be configured in a structure that does not extend to the outside of the battery case 600. In this case, a separate heat transfer material, for example, a separate medium having heat conduction properties substantially similar to those of the heat dissipation layer 11, may be connected to the heat dissipation layer 11 inside the battery case 600 to dissipate heat to the outside.

The heat dissipation layer 11 is configured to dissipate heat generated inside the battery from the heat dissipation current collector 10 to the outside of the battery. The heat dissipation layer 11 is made of a material having a lower thermal conductivity than the metal layer 15 disposed on the polymer layer 13, and may include, for example, at least one of silicone and acrylic resin. When the heat dissipation layer 11 includes at least one of silicone and acrylic resin, stability against an internal short circuit may be ensured even if the electrode structure collapses due to an external impact.

The thermal conductivity (k1) of the heat dissipation layer 11 is, for example, about 10 W/K·m or less, or about 1 W/K·m to 8 W/K·m, or about 2 W/K·m to 6W/K·m.

By having an insulating property, the heat dissipation layer 11 may be relatively stable against a secondary internal short circuit when the electrode structure collapses due to an external impact.

The polymer layer 13 is configured to interconnect the heat dissipation layer 11 and the metal layer 15 in the heat dissipation current collector 10. For example, the polymer layer 13 is disposed between the heat dissipation layer 11 and the metal layer 15. The polymer layer 13 may include at least one selected from a group consisting of polyethylene terephthalate (PET), polyimide (PI), poly(methylmethacrylate) (PMMA), cellulose tri-acetate (CTA), polypropylene (PP), polyethylene (PE), polycarbonate (PC), and polyethylene naphthalate (PEN).

The ratio (t3/t1) of the melting point (t3) of the polymer layer 13 to the melting point (t1) of the heat dissipation layer 11 is about 0.1 to 2.0, 0.1 to 1.9, or 0.1 to 1.6. When the ratio (t3/t1) satisfies the above-mentioned numerical ranges, since the difference in melting point between the heat dissipation layer 11 and the polymer layer 13 is not large, the heat dissipation layer and the polymer layer are melted together when the battery behaves abnormally, such as when the metal layer 15 is penetrated, so that current inflow required for thermal runaway can be suppressed. In contrast, when the difference in melting point between the heat dissipation layer 11 and the polymer layer 13 is large and the heat dissipation layer and the polymer layer do not melt together, energy leading to thermal runaway is continuously supplied via the metal layer 15, which may make it difficult to prevent a risk such as ignition of the lithium secondary battery. In addition, when the ratio (t3/t1) exceeds about 2.0, there is a problem in that thermal runaway due to a rise in battery temperature due to the melting of the heat dissipation layer 11, which has a low melting point, is not controllable.

The metal layer 15 may include aluminum or copper. When the metal layer 15 contains aluminum, the metal layer may generally be used as a positive electrode current collector, and when the metal layer 15 contains copper, the metal layer may generally be used as a negative electrode current collector. The metal layer 15 may be formed on the polymer layer 13 through a process such as deposition or lamination, or may be formed through a conventional adhesion method.

The thermal conductivity (k2) of the metal layer 15 is about 200W/K·m to 500W/K·m, for example, 200W/K·m to 450W/K·m, or 220W/K·m to 430W/K·m.

The ratio (k2/k1) of the thermal conductivity (k2) of the metal layer 15 to the thermal conductivity (k1) of the heat dissipation layer 11 may be about 40 to 200, for example, 50 to 150, or 50 to 120. When the ratio (k2/k1) satisfies the above-mentioned numerical ranges, heat generated inside the lithium secondary battery is dissipated to the outside so that safety can be improved.

The ratio (w2/w1) of the thickness (w2) of the metal layer 15 to the thickness (w1) of the heat dissipation layer 11 may be about 0.67 or less, for example, about 0.33 or less, or about 0.02 to 0.1. When the ratio (w2/w1) satisfies the above-mentioned numerical ranges, heat generated inside the lithium secondary battery is dissipated to the outside so that safety can be improved.

In the heat dissipation current collector 10, the polymer layer 13 may include a first polymer layer 13A and a second polymer layer 13B, and the metal layer 15 may include a first metal layer 15A and a second metal layer 15B disposed to be spaced apart from each other with reference to the heat dissipation layer 11. The first polymer layer 13A and the first metal layer 15A may be sequentially stacked on one surface of the heat dissipation layer 11, and the second polymer layer 13B and the second metal layer 15B may be sequentially stacked on the other surface of the heat dissipation layer 11.

According to an embodiment, the electrode 150 including the heat dissipation current collector 10 may be disposed at an outermost position of the electrode assembly 500. For example, in FIG. 1, the electrode 150 including the heat dissipation current collector 10 may be located at the top position. When the electrode 150 is disposed at the outermost position of the electrode assembly 500, interference with other electrodes may not occur when forming a passage that dissipates heat via the heat dissipation layer included in the heat dissipation current collector 10. Meanwhile, as long as interference with other electrodes does not occur, the electrode 150 is not limited to being disposed at the outermost position as in this embodiment and, for example, may be located anywhere within the battery case 600. For example, the electrode 150 of the present disclosure may be disposed anywhere between the plurality of electrodes.

### (Electrode Active Material Layer)

Except for the fact that the electrode active material layer 17 is formed by applying an active material slurry to the surface of the above-mentioned heat dissipation current collector, and then drying and rolling the active material slurry, the electrode active material layer 17 may be used without particular restrictions as long as it is generally used as an electrode active material layer in a lithium secondary battery.

The active material slurry may contain an active material and a solvent.

The active material may be an active material commonly used in the art, for example, a negative electrode active material or a positive electrode active material. The negative electrode active material may contain at least one selected from a group consisting of a lithium metal, a carbon material capable of reversibly intercalating/deintercalating lithium ions, metals or alloys of these metals and lithium, and a metal composite oxide, a material capable of doping and dedoping lithium, and a transition metal oxide. The positive electrode active material is a compound capable of reversibly intercalating and deintercalating lithium, and may, for example, contain a lithium metal oxide containing lithium and one or more metals such as cobalt, manganese, nickel, and aluminum. According to an embodiment, the lithium metal oxide may include, for example, a lithium-manganese-based oxide, a lithium-cobalt-based oxide, a lithium-nickel-based oxide, a lithium-nickel-manganese-based oxide, a lithium-nickel-cobalt-based oxide, a lithium-manganese-cobalt-based oxide, a lithium-nickel-manganese-cobalt-based oxide, or a lithium-nickel-cobalt-transition metal (M) oxide, and one or two or more of these compounds may be included.

The solvent may be a solvent generally used in the art, and may contain at least one selected from a group consisting of dimethyl sulfoxide (DMSO), isopropyl alcohol, N-methylpyrrolidone (NMP), dimethyl formamide (DMF), acetone, and water (H₂O). Considering the application thickness and manufacturing yield of the slurry, it is sufficient for the solvent to be used in an amount that dissolves or disperses the active material, a binder, and a conductive material, and has a viscosity that can exhibit excellent thickness uniformity when applied for subsequent electrode manufacturing.

The active material slurry may further include at least one of a binder and a conductive material along with the active material and the solvent.

The binder serves to improve adhesion between active material particles and adhesion between the active material and the current collector. The active material is applicable to both a non-aqueous binder and an aqueous binder, and there are no special restrictions on the type of the binder. As an example, the negative electrode active material in the present disclosure is applicable to an aqueous binder. As another example, the water-based binder may include at least one of styrene-based rubber, such as styrene-butadiene rubber (SBR), acrylate-styrene butadiene copolymer rubber (acrylate-co-SBR), or acrylonitrile-styrene butadiene copolymer rubber (acrylonitrile-co-SBR), and an acrylate-based compound, such as a methyl methacrylate-lithium methacrylate copolymer (P(MMA-co-LiMA)), an alkyl acrylate-acrylonitrile-acrylic acid copolymer (P(alkyl acrylate-co-acrylonitrile-acrylic acid)), a polyacrylic acid (PAA), or a polyimide series.

The conductive material is a component to further improve the conductivity of the active material, and the conductive material is not particularly limited as long as it has conductivity without causing a chemical change in the battery. As an example, graphite such as natural graphite or artificial graphite, carbon black such as acetylene black, Ketjen black, channel black, furnace black, lamp black, or thermal black, conductive fiber such as carbon fiber or metal fiber, fluorinated carbon, metal powder such as aluminum powder or nickel powder, conductive whisker such as zinc oxide or potassium titanate, a conductive metal oxide such as titanium oxide, and a conductive material such as a polyphenylene derivative may be used.

For the application of the electrode active material layer, any slurry application method known in the art may be used without limitation. For example, a slit-die method, a gravure method, a doctor blade method, a silk screen method, an offset method, a spray method, or a dip method may be used.

### (Positive Electrode)

The positive electrode 100 may include a positive electrode current collector and a positive electrode active material formed on the positive electrode current collector. Since the positive electrode active material is the same as the active material described above, a detailed description thereof will be omitted.

The positive electrode current collector may contain a highly conductive metal, and is not particularly limited as long as the positive electrode active material layer is easily attached thereto, but is not reactive within the voltage range of the battery. As the positive electrode current collector, for example, stainless steel, aluminum, nickel, titanium, heat-treated carbon, or aluminum, or stainless steel surface-treated with, for example, carbon, nickel, titanium, or silver may be used. In addition, the positive electrode current collector may typically have a thickness of about 3µm to 500µm, and fine irregularities may be formed on the surface of the current collector to increase the adhesion of the positive electrode active material. For example, the positive electrode current collector may be used in various forms such as a film, a sheet, a foil, a net, a porous material, a foam, and a non-woven material.

### (Negative Electrode)

The negative electrode 200 may include a negative electrode current collector and a negative electrode active material formed on the negative electrode current collector. Since the negative electrode active material is the same as the active material described above, a detailed description thereof will be omitted.

The negative electrode current collector is not particularly limited as long as it has high conductivity without causing a chemical change in the battery, and as the negative electrode current collector, for example, copper, stainless steel, aluminum, nickel, titanium, heat-treated carbon, or copper, stainless steel surface-treated with, for example, carbon, nickel, titanium, or silver, or aluminum-cadmium alloy, may be used. In addition, the negative electrode current collector may typically have a thickness of about 3µm to 500µm, and like the positive electrode current collector, fine irregularities may be formed on the surface of the current collector to strengthen the bonding force of the negative electrode active material. For example, the negative electrode current collector may be used in various forms such as a film, a sheet, a foil, a net, a porous material, a foam, and a non-woven material.

### (Separator)

The separator 300 separates a negative electrode and a positive electrode from each other and provides a moving passage for lithium ions. Any separator may be used without special restrictions as long as it is normally used in lithium secondary batteries. In particular, a separator having low resistance to ion movement in the electrolyte and excellent electrolyte moisturizing ability may be used. For example, porous polymer films such as porous polymer films made of polyolefin polymers such as an ethylene homopolymer, a propylene homopolymer, an ethylene/butene copolymer, an ethylene/hexene copolymer, and an ethylene/methacrylate copolymer, or a laminated structure of two or more layers of above-mentioned porous polymer films may be used. In addition, conventional porous non-woven fabrics such as non-woven fabrics made of, for example, high melting point glass fiber or polyethylene terephthalate fiber may be used. In addition, a coated separator containing a ceramic component or a polymer material to ensure heat resistance or mechanical strength may be used, and may optionally be used in a single-layer or multi-layer structure.

### (Electrolyte)

The lithium secondary battery according to the present disclosure may further include an electrolyte. Examples of electrolytes used in the present disclosure include an organic liquid electrolyte, an inorganic liquid electrolyte, a solid polymer electrolyte, a gel-type polymer electrolyte, a solid inorganic electrolyte, and a molten inorganic electrolyte that can be used in the production of lithium secondary batteries, and are not limited thereto.

The electrolyte may include an organic solvent and a lithium salt.

The organic solvent may be used without particular restrictions as long as it can serve as a medium through which ions involved in the electrochemical reaction of the battery can move. For example, as the organic solvent, for example, an ester-based solvent such as methyl acetate, ethyl acetate, γ-butyrolactone, or ε-caprolactone, an ether-based solvent such as dibutyl ether or tetrahydrofuran, a ketone-based solvent such as cyclohexanone, an aromatic hydrocarbon solvent such as benzene or fluorobenzene, a carbonate-based solvent such as dimethylcarbonate (DMC), diethylcarbonate (DEC), methylethylcarbonate (MEC), ethylmethylcarbonate (EMC), ethylene carbonate (EC), or propylene carbonate (PC), an alcohol-based solvent such as ethyl alcohol and isopropyl alcohol, nitriles such as R-CN (R is a straight-chain, branched, or ring-structured hydrocarbon group having 2 to 20 carbon atoms and may include a double bond, an aromatic ring or ether bond), amides such as dimethylformamide, or dioxolanes such as 1,3-dioxolane, or sulfolanes may be used. Among these, the carbonate-based solvent is preferable, and a mixtur of a cyclic carbonate (e.g., ethylene carbonate or propylene carbonate) with high ionic conductivity and high dielectric constant capable of improving the charge/discharge performance of the battery, and a low-viscosity linear carbonate-based compound (e.g., ethylmethyl carbonate, dimethyl carbonate, or diethyl carbonate) is more preferable.

The lithium salt may be used without particular restrictions as long as it is a compound capable of providing lithium ions used in lithium secondary batteries. For example, the anion of the lithium salt may be at least one selected from a group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, for example, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. The concentration of the lithium salt may be used within the range of 0.1M to 4.0M, 0.5M to 3.0M, or 1.0M to 2.0M. When the concentration of lithium salt is within the above-mentioned ranges, the electrolyte has appropriate conductivity and viscosity, so that excellent electrolyte performance can be achieved and lithium ions can effectively move.

In addition to the electrolyte components, for the purpose of, for example, improving battery life characteristics, suppressing battery capacity reduction, and improving battery discharge capacity, the electrolyte may further include, for example, at least one additive such as a haloalkylene carbonate-based compound (e.g., difluoroethylene carbonate), pyridine, triethylphosphite, triethanolamine, cyclic ether, ethylene diamine, n-glyme, hexa triamide, a nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride. Here, the additive may be included in an amount of approximately 0.1 % by weight to 10.0 % by weight based on the total weight of the electrolyte.

### Battery Case

The battery case has an empty space therein, and may be configured to accommodate an electrode assembly and an electrolyte in this inner space.

Depending on the material of the battery case, the lithium secondary battery is classified into a can-type battery in which the electrode assembly is built in a cylindrical or square metal can, or a pouch-type battery in which the electrode assembly is built in a pouch-type case of an aluminum laminate sheet. The lithium secondary battery according to the present disclosure may be a pouch-type secondary battery.

In addition to the battery case 600 described above, the lithium secondary battery according to the present disclosure may optionally further include a sealing member (not illustrated) that seals the battery case 600.

The lithium secondary battery according to the present disclosure may further include a positive electrode tab connected to a plurality of positive electrodes 100 and a negative electrode tab connected to a plurality of negative electrodes 200. The positive electrode tab may extend and protrude from one ends of the positive electrodes 100, may be welded to one ends of the positive electrodes 100, or may be bonded to one ends of the positive electrodes using a conductive adhesive. The negative electrode tab may extend and protrude from one ends of the negative electrodes 200, may be welded to one ends of the negative electrodes 200, or may be bonded to one ends of the negative electrodes using a conductive adhesive.

As described above, the lithium secondary battery including the heat dissipation current collector according to the present disclosure stably exhibits excellent discharge capacity, output characteristics, and capacity maintenance rate. Therefore, the lithium secondary battery is useful in the fields of portable devices such as a mobile phone, a laptop computer, and a digital camera, and electric vehicles such as a hybrid electric vehicle (HEV).

Accordingly, another embodiment of the present disclosure provides a battery module including the lithium secondary battery as a unit cell, and a battery pack including the battery module.

The battery module or battery pack may be used as a power source for at least one of mid- to large-sized devices such as a power tool, an electric vehicle (EV) such as a hybrid electric vehicle or a plug-in hybrid electric vehicle (PHEV), and a power storage system.

Although described above with reference to the preferable embodiments of the present invention, those skilled in the art or those having ordinary knowledge in the art may understand that the present invention may be variously modified and changed without departing from the spirit and technical area of the present invention described in the claims to be described below. Therefore, the technical scope of the present invention should be determined by the claims, not limited to the contents described in the detailed description of the specification.

## Claims

1. A lithium secondary battery comprising:
an electrode assembly; and
a battery case configured to accommodate the electrode assembly,
wherein the electrode assembly includes a positive electrode, a negative electrode, and a separator which are sequentially stacked,
wherein at least one of the positive electrode and the negative electrode includes a heat dissipation current collector and an electrode active material layer formed on at least one surface of the heat dissipation current collector,
wherein the heat dissipation current collector includes a heat dissipation layer, a polymer layer disposed on the heat dissipation layer, and a metal layer disposed on the polymer layer, and
wherein the heat dissipation layer of the heat dissipation current collector includes a passage extending to an outside of the battery case and configured to dissipate heat inside the battery.

2. The lithium secondary battery of claim 1, wherein the heat dissipation layer includes at least one of silicone and acrylic resin.

3. The lithium secondary battery of claim 1, wherein the heat dissipation layer has an insulating property.

4. The lithium secondary battery of claim 1, wherein the heat dissipation layer has a thermal conductivity (k1) of about 10 W/K·m or less.

5. The lithium secondary battery of claim 1, wherein the metal layer includes aluminum or copper.

6. The lithium secondary battery of claim 1, wherein the metal layer has a thermal conductivity (k2) of about 200 W/K·m to 500 W/K·m.

7. The lithium secondary battery of claim 1, wherein a ratio (k2/k1) of the thermal conductivity (k2) of the metal layer to the thermal conductivity (k1) of the heat dissipation layer is about 40 to 200.

8. The lithium secondary battery of claim 1, wherein the polymer layer includes at least one selected from a group consisting of polyethylene terephthalate (PET), polyimide (PI), polymethyl methacrylate (PMMA), cellulose triacetate (CTA), polypropylene (PP), polyethylene (PE), polycarbonate (PC), and polyethylene naphthalate (PEN).

9. The lithium secondary battery of claim 1, wherein a ratio (t3/t1) of a melting point (t3) of the polymer layer to a melting point (t1) of the heat dissipation layer is about 0.1 to 2.0.

10. The lithium secondary battery of claim 1, wherein a ratio (w2/w1) of a thickness (w2) of the metal layer to a thickness (w1) of the heat dissipation layer is about 0.67 or less.

11. The lithium secondary battery of claim 1, wherein the polymer layer includes a first polymer layer and a second polymer layer disposed to be spaced apart from each other,
wherein the metal layer includes a first metal layer and a second metal layer disposed to be spaced apart from each other, and
wherein the first polymer layer and the first metal layer are sequentially stacked on one surface of the heat dissipation layer, and the second polymer layer and the second metal layer are sequentially stacked on the other surface of the heat dissipation layer.

12. The lithium secondary battery of claim 1, wherein the electrode assembly includes a plurality of positive electrodes, a plurality of negative electrodes, and a plurality of separators, and an electrode including the heat dissipation current collector is disposed at an outermost position of the electrode assembly.

13. A lithium secondary battery electrode assembly comprising:
a positive electrode;
a negative electrode; and
a separator,
wherein at least one of the positive electrode and the negative electrode includes a heat dissipation current collector including a heat dissipation layer having a lower thermal conductivity than a thermal conductivity of a metal layer used as the current collector of the corresponding electrode, and
wherein the heat dissipation layer is connected to an outside of the battery and is configured to dissipate heat inside the battery to the outside of the battery.

14. The lithium secondary battery electrode assembly of claim 13, wherein the heat dissipation current collector includes a polymer layer on at least one surface of the heat dissipation layer and a metal layer disposed on the polymer layer.

15. The lithium secondary battery electrode assembly of claim 14, wherein the polymer layer has a melting point substantially similar to that of the heat dissipation layer.

16. A method of manufacturing a lithium secondary battery electrode assembly including a positive electrode, a negative electrode, and a separator, the method comprising:
configuring at least one of the positive electrode and the negative electrode to include a heat dissipation current collector including a heat dissipation layer having a lower thermal conductivity than a thermal conductivity of a metal layer used as the current collector of the corresponding electrode; and
configuring the heat dissipation layer to extend to an outside of the battery and to dissipate heat inside the battery to the outside of the battery.

17. The method of claim 16, further comprising:
configuring the heat dissipation current collector to include a polymer layer on at least one surface of the heat dissipation layer and a metal layer disposed on the polymer layer.

18. The method of claim 17, further comprising:
configuring the polymer layer to have a melting point substantially similar to that of the heat dissipation layer.
